Europäisches Patentamt

European Patent Office

Office européen des brevets

(19)

(11) Veröffentlichungsnummer: 0 365 990
A2

## (12) EUROPÄISCHE PATENTANMELDUNG

(21) Anmeldenummer: 89119325.2

(22) Anmeldetag: 18.10.89

(51) Int. Cl.⁵: B60S 1/04

(30) Priorität: 22.10.88 DE 3836031

(43) Veröffentlichungstag der Anmeldung:
02.05.90 Patentblatt 90/18

(84) Benannte Vertragsstaaten:
AT BE CH DE ES FR GB IT LI

(71) Anmelder: DEERE & COMPANY
1 John Deere Road
Moline, Illinois 61265(US)

Anmelder: SWF Auto-Electric GmbH
Stuttgarter Strasse 119 Postfach 135
D-7120 Bietigheim-Bissingen(DE)

(72) Erfinder: Alber, Paul
Sperberweg 21
D-7143 Vaihingen-Aurich(DE)
Erfinder: Edele, Reinhard
Metterzimmerer Strasse 23
D-7123 Sachsenheim 2(DE)
Erfinder: Hauk, Klaus
Berliner Strasse 28
D-6701 Altrip(DE)
Erfinder: Teich, Michael
August-Bebel-Strasse 91
D-6800 Mannheim 24(DE)
Erfinder: Schütze, Michael
Mönchwörthstrasse 88
D-6800 Mannheim 24(DE)

(74) Vertreter: Feldmann, Bernhard et al
DEERE & COMPANY European Office, Patent
Department Steubenstrasse 36-42 Postfach
503
D-6800 Mannheim 1(DE)

(54) Scheibenwischeranlage für schwenkbare Scheiben von insbesondere Kraftfahrzeugen.

(57) Eine Scheibenwischeranlage für schwenkbare Scheiben (12), insbesondere bei Kraftfahrzeugen, weist eine Wischerwelle (19), die benachbart zur Schwenkachse (13) der Scheibe (12) am Fahrzeugaufbau gelagert ist, und einen über die Scheibe (12) ragenden, mit einem Befestigungsteil (31) an der Wischerwelle (19) befestigten Wischarm (30), auf. Der Wischarm (30) hat ein gegenüber dem Befestigungsteil (31) um eine Schwenkachse (33) verschwenkbares Gelenkteil (32) und kann von einem Elektromotor (14) in eine Parkstellung auf der Scheibe (12) gebracht werden. In der Parkstellung wird der Elektromotor (14) über einen Parkstellungsschalter (50, 60) selbsttätig abgeschaltet. Um ein leichtes Öffnen der Scheibe (12) ohne Beschädigung zu ermöglichen, verläuft in der Parkstellung die Schwenkachse (33) zwischen dem Befestigungsteil (31) und dem Gelenkteil (32) des Wischarms (30) wenigstens annähernd parallel zur Schwenkachse (13) der Scheibe (12).

Fig.1

31  19  21  16 17  15  14  11

10

20

32

34  30

24

12

25

## Scheibenwischeranlage für schwenkbare Scheiben von insbesondere Kraftfahrzeugen

Die Erfindung betrifft eine Scheibenwischeranlage für schwenkbare Scheiben von insbesondere Kraftfahrzeugen, die die Merkmale aus dem Oberbegriff des Anspruchs 1 aufweist.

Die meisten Baumaschinen und land- und forstwirtschaftlichen Schlepper sind heute mit Fahrerkabinen ausgestattet. Zur Belüftung der Kabinen kann bei manchen Modellen eine Scheibe, insbesondere die Frontscheibe, um eine horizontale Achse verschwenkt werden. Bei solchen Fahrzeugen muß Vorsorge getroffen werden, daß Teile einer der verschwenkbaren Scheibe zugeordneten Scheibenwischeranlage die Verschwenkbarkeit der Scheibe nicht behindern.

Es ist eine Scheibenwischeranlage für eine schwenkbare Scheibe eines Schleppers bekannt, bei der während des Betriebs ein von einem Wischarm getragenes Wischblatt innerhalb der schwenkbaren Scheibe zwischen zwei Umkehrlagen hin und her bewegt wird. Wird die Scheibenwischeranlage ausgeschaltet, so wird das Wischblatt in eine Parkstellung außerhalb des Wischfeldes und außerhalb der Scheibe gebracht, in der weder das Wischblatt noch der Wischarm ein Verschwenken der Scheibe behindern können. Den zusätzlichen Schwenkwinkel in die außerhalb des Wischfeldes liegende Parkstellung erhält man nur mit einem beträchtlichen mechanischen und elektrischen Aufwand. Damit das Wischblatt beim Hinausfahren über den Scheibenrand nicht beschädigt wird, ist darüberhinaus bei der bekannten Anlage eine Leitvorrichtung vorgesehen die den Wischarm und das Wischblatt von der Scheibe abheben, wenn diese in die Parkstellung gebracht werden.

Aufgabe der Erfindung ist es, eine Scheibenwischeranlage mit den Merkmalen aus dem Oberbegriff des Anspruchs 1 auf einfache Weise so weiterzuentwickeln, daß die Scheibe des Fahrzeugs verschwenkt werden kann, ohne daß Teile der Scheibenwischeranlage dabei stören oder die Gefahr einer Beschädigung der Scheibe besteht.

Diese Aufgabe wird erfindungsgemäß durch eine Scheibenwischeranlage gelöst, die die Merkmale aus dem Oberbegriff des Anspruchs 1 aufweist und bei der in der Parkstellung die Schwenkachse zwischen dem Befestigungsteil und dem Gelenkteil des Wischarms wenigstens annähernd parallel zur Schwenkachse der Scheibe verläuft. Durch diese Zuordnung der beiden Schwenkachsen zueinander können das Gelenkteil des Wischarms und das Wischblatt leicht mit der Scheibe verschwenkt werden. Die Neigung des Wischblatts zur Scheibe bleibt dabei wenigstens annähernd unverändert, so daß keine Gefahr besteht, daß die Scheibe von Wischblatt verkratzt wird.

Vorteilhafte Ausgestaltungen einer erfindungsgemäßen Scheibenwischeranlage finden sich in den Unteransprüchen.

Oft wird ein Wischfeld gewünscht, das bezüglich einer senkrecht auf der Schwenkachse der Scheibe stehenden vertikalen Ebene weitgehend symmetrisch ist. Bei parallelen Schwenkachsen der Scheibe und des Wischarmgelenkteils kann man ein solches Wischfeld dadurch erhalten, daß gemäß Anspruch 2 das Gelenkteil, insbesondere eine zum Gelenkteil gehörende Wischstange aus einer senkrecht auf der Schwenkachse zwischen dem Befestigungsteil und dem Gelenkteil stehenden Ebene harausgebogen ist. Da jedoch ein solcher Wischarm kompliziert herzustellen und deshalb relativ teuer ist, wird eine Ausführung gemäß Anspruch 3 bevorzugt. Danach besitzt der Wischarm eine erste Parkstellung am Rande des Wischfeldes, in der er bei Beendigung des Wischbetriebs selbsttätig ablegbar ist, und eine zweite Parkstellung innerhalb des Wischfeldes, in der die Schwenkachse zwischen dem Befestigungsteil und dem Gelenkteil des Wischarms wenigstens annähernd parallel zur Schwenkachse der Scheibe verläuft und in die Wischarm vom Antriebsmotor nach Betätigung einer Schalteinrichtung verfahrbar ist. Der innerhalb des Wischfeldes in der zweiten Parkstellung liegende Wischarm stört den Fahrzeugführer nicht, da der Wischarm diese Parkstellung nur dann einnehmen soll, wenn die Scheibe im Sinne einer Öffnung der Fahrerkabine verschwenkt ist.

An sich könnte man daran denken, eine Schalteinrichtung vorzusehen, die vom Fahrzeugführer betätigt werden muß, wenn er die Scheibe verschwenken will und der Wischarm und das Wischblatt in die zweite Parkstellung gefahren werden sollen. Sollte der Fahrzeugführer jedoch einmal die Betätigung der Schalteinrichtung vergessen, so könnten beim Ausschwenken der Scheibe diese und Teile der Scheibenwischeranlage beschädigt werden. Deshalb ist es vorteilhaft, wenn die Schalteinrichtung gemäß Anspruch 5 beim Verschwenken der Scheibe unwillkürlich betätigbar ist.

Auf sehr einfache Weise erhält man die beiden Parkstellungen dadurch, daß der Elektromotor in der ersten Parkstellung über einen ersten Parkstellungsschalter und in der zweiten Parkstellung über einen zweiten Parkstellungsschalter abschaltbar ist. Es kann dann im Prinzip eine Schaltung verwendet werden, wie sie durch die DE-PS 25 03 030 bekannt ist. Irgendwelche Veränderungen im Getriebe, z. B. die Verkürzung einer Kurbel, sind nicht notwendig.

Man kann davon ausgehen, daß die Scheibe der Fahrerkabine nur dann geöffnet wird, wenn es nicht regnet. Die Scheibe ist dann trocken. Es genügt dann, wenn der Elektromotor in der zweiten Parkstellung lediglich durch Abschalten des Steuerpotentials ohne Kurzschlußbremsung stillgesetzt wird. Bei trockener Scheibe ist die Reibung zwischen Scheibe und Wischblatt nämlich so groß, daß sich der Elektromotor nur langsam dreht und unmittelbar nach dem Abschalten auch ohne Kurzschlußbremsung stehen bleibt. Für den zweiten Parkstellungsschalter ist dann gemäß Anspruch 8 nur ein einziger zusätzlicher Kontakt notwendig. Da im Bremsstromkreis des Elektromotors keine Lastströme fließen, ist das Bremspotential gemäß Anspruch 9 direkt über die Schalteinrichtung schaltbar. Trotzden kann diese ein preiswerter Schalter sein, der nur für Steuerströme z. B. eines elektrischen Relais ausgelegt ist.

Besonders bevorzugt wird eine Ausführung gemäß Anspruch 10, nach der der Wischarm gerade ist und sich in der zweiten Parkstellung wenigstens annähernd in der Mitte des Wischfeldes befindet. Man kann dann mit einem einfach aufgebauten Wischarm ein Wischfeld erhalten, das symmetrisch bezüglich einer senkrecht auf der Schwenkachse der Scheibe stehenden vertikalen Ebene ist und das eine große gereinigte Fläche der Scheibe ergibt.

Zwei Ausführungen einer erfindungsgemäßen Scheibenwischeranlage sind in den Zeichnungen dargestellt. Anhand der Fig. dieser Zeichnungen wird die Erfindung nun näher erläutert.

Es zeigen      ʳ

Fig. 1 in Frontansicht eine Fahrerkabine mit einer schwenkbaren Scheibe und einer ersten Ausführung einer erfindungsgemäßen Scheibenwischeranlage bei der der Wischarm nur eine Parkstellung besitzt,

Fig. 2 eine Frontansicht einer Fahrerkabine mit einer zweiten Ausführung einer erfindungsgemäßen Scheibenwischeranlage mit zwei Parkstellung des Wischarms,

Fig. 3 eine Seitenansicht der Fahrerkabinen der Fig. 1 und 2 mit geschlossener und mit ausgeschwenkter Scheibe und entsprechenden Stellungen des Wischarms und

Fig. 4 eine Schaltanordnung für eine Scheibenwischeranlage mit zwei Parkstellungen des Wischarms.

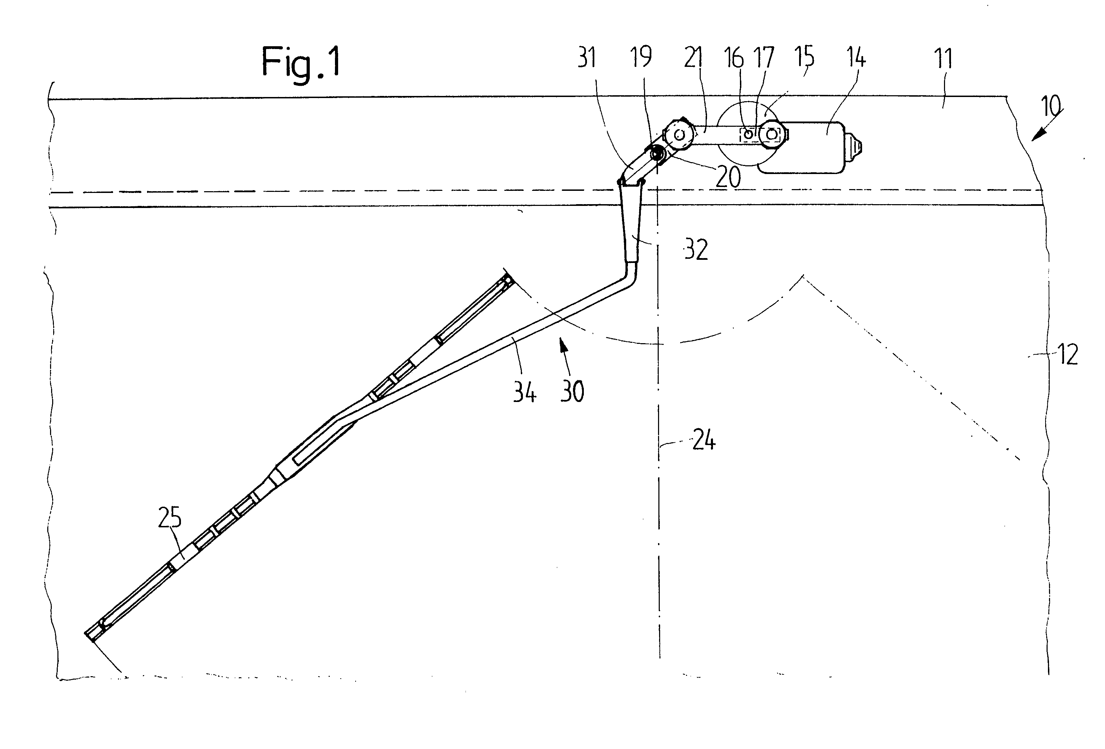

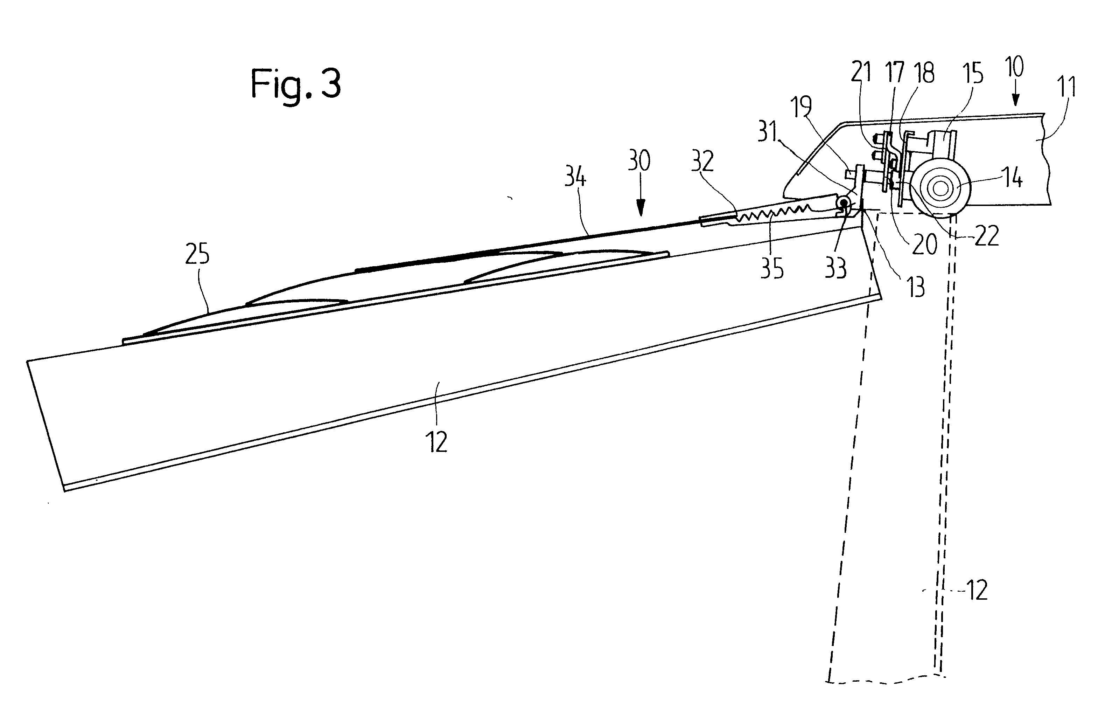

In den Fig. 1 bis 3 ist die Fahrerkabine 10 eines Schleppers erkennbar, die ein Dach 11 und eine Frontscheibe 12 aufweist. Die Frontscheibe 12 ist um eine knapp unterhalb des Daches 11 horizontal verlaufende Achse 13, die in Fig. 3 durch ein Kreuz gekennzeichnet ist, nach vorne oben verschwenkbar.

In das Dach 11 der Fahrerkabine 10 ist eine Scheibenwischeranlage eingebaut, zu der ein Elektromotor 14 gehört. Aus einem Getriebetopf 15 des Elektromotors 14, in dem in bekannter Weise ein Schneckengetriebe untergebracht ist, ragt die Motorwelle 16 heraus. An dieser ist eine Motorkurbel 17 verdrehsicher befestigt, die umlaufend angetrieben wird. Der Elektromotor 14 ist an ein Halteblech 18 montiert, an dem auch eine Lagerbuchse 22 für eine Wischerwelle 19 befestigt ist, die einen Abstand von der Motorwelle 16 besitzt und parallel zu dieser angeordnet ist. Mit der Wischerwelle ist eine Kurbelschwinge 20 verdrehsicher verbunden. Eine Koppelstange 21 ist sowohl an die Motorkurbel 17 als auch an die Kurbelschwinge 20 angelenkt. Im Betrieb wird also die Wischerwelle 19 über die umlaufende Motorkurbel 17, die Koppelstange 21 und die Kurbelschwinge 20 pendelnd angetrieben.

Die Wischerwelle 19 liegt in einer senkrecht auf der Schwenkachse 13 der Frontscheibe 12 stehenden, mittig durch die Frontscheibe 12 verlaufende Ebene. Auf der Scheibe 12 soll von einem Wischblatt 25 ein sektorartiges Wischfeld überstrichen werden, das etwa zu gleichen Teilen auf beiden Seiten der mittigen Ebene 24 liegt. Das Wischblatt 25 ist gelenkig am freien Ende eines Wischarms 30 gehalten, der von der Wischerwelle 19 auf über die Frontscheibe 12 ragt. Der Wischarm 30 weist ein Befestigungsteil 31, mit dem er verdrehsicher an der Wischerwelle 19 befestigt ist, ein U-förmiges Gelenkteil 32, das, um eine Achse 33 schwenkbar, am Befestigungteil 31 angelenkt ist und eine Wischstange 34 auf, die mit ihrem einen Ende vom Gelenkteil 32 umklammert ist und an ihrem anderen Ende das Wischblatt 25 trägt. Im Gelenkteil 32 befindet sich eine Schraubenfeder 35, die an der Wischstange 34 und somit indirekt am Gelenkteil 32 und am Befestigungsteil 31 eingehängt ist, das Gelenkteil gegen die Frontscheibe 12 zieht und dadurch einen Druck des Wischblatts gegen die Scheibe erzeugt.

Die Frontscheibe 12 soll trotz des Wischarms 30 und des Wischblatts 25 hochgeklappt werden können, ohne das sie dabei beschädigt wird. Dies wird nach der Erfindung dadurch erreicht, daß die gezeigten Scheibenwischeranlagen eine Parkstellung des Wischarms aufweisen, in der die Achse 33 des Gelenks zwischen dem Befestigungsteil 31 und dem Gelenkteil 32 parallel zur Schwenkachse 13 der Frontscheibe 12 verläuft. In der Darstellung nach Fig. 3 verlaufen beide Achsen senkrecht zur Zeichenebene. Durch die Parallelität der beiden Achsen lassen sich das Gelenkteil 32 und die Wischstange 34 des Wischarms 30 sowie das Wischblatt 25 beim Hochklappen der Scheibe 12 leicht verschwenken. Dabei behalten sie ihre Lage bezüglich der Scheibe weitgehend bei, so daß ein Verkratzen der Scheibe vermieden wird.

Bei der Ausführung nach Fig. 1 besitzen der Wischarm 30 und das Wischblatt 25 nur eine Parkstellung, die am Rande des Wischfeldes liegt und mit einer Stellung zusammenfällt, in der sich während des Betriebs die Bewegungsrichtung des Wischblatts umkehrt. Das Befestigungsteil 31 und das Gelenkteil 32 könnten an sich in der Mittelebene 24 liegen, wenn sich der Wischarm 30 in der Parkstellung befindet. Dann würden sie jedoch in der anderen Umkehrlage des Wischblatts 25 weit in das Dach 11 hineinragen, wo meist kein Platz zur Verfügung steht. Deshalb ist bei der Ausführung nach Fig. 1 das Befestigungsteil geknickt, so daß es in der Parkstellung des Wischarms 30, ausgehend von der Wischerwelle 19, zunächst im Winkel zur Mittelebene 24 verläuft, dann jedoch in eine zur Mittelebene parallele Ebene abbiegt, so daß das Gelenkteil 32 parallel zu dieser Ebene 24 verläuft und die Achse 33 zwischen Befestigungsteil 31 und Gelenkteil 32 parallel zur Schwenkachse 13 der Scheibe 12 ist. Der Knick im Befestigungsteil 31 wird durch einen Knick in der Wischstange 34 des Wischarms 30 wieder ausgeglichen.

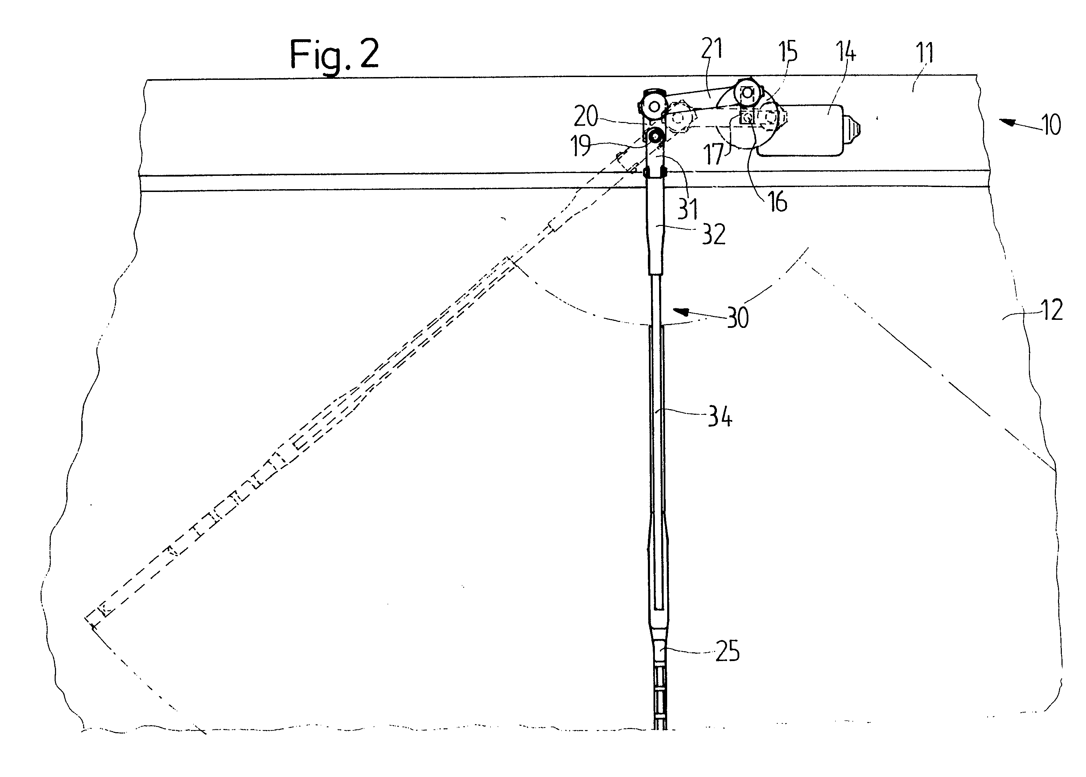

Bei der Ausführung nach den Fig. 2 bis 4 besitzt der Wischarm 30, dessen Befestigungteil 31, Gelenkteil 32 und Wischstange 34 nun auf einer geraden Linie liegen, zwei Parkstellungen, von denen in Fig. 2 eine mit durchgehenden und eine mit unterbrochenen Linien eingezeichnet ist. Letztere ist die normale Parkstellung am Rande des Wischfeldes, die der Wischarm 30 bei geschlossener Scheibe 12 nach Abschalten der Anlage einnimmt. In die andere Parkstellung, die sich in der Mitte des Wischfeldes befindet, wird der Wischarm 30 vom Elektromotor, 14 dann verfahren, wenn die Scheibe 12 hochgeklappt wird. In dieser weiteren Parkstellung verläuft die Achse 33 zwischen dem Befestigungteil 31 und dem Gelenkteil 32 des Wischarms 30 parallel zur Schwenkachse 13 der Scheibe 12. Wie bei der Ausführung nach Fig. 1 kann also nun die Scheibe 12 mit Teilen des Wischarms und mit dem Wischblatt ganz hochgeklappt werden, wie dies in Fig. 3 dargestellt ist.

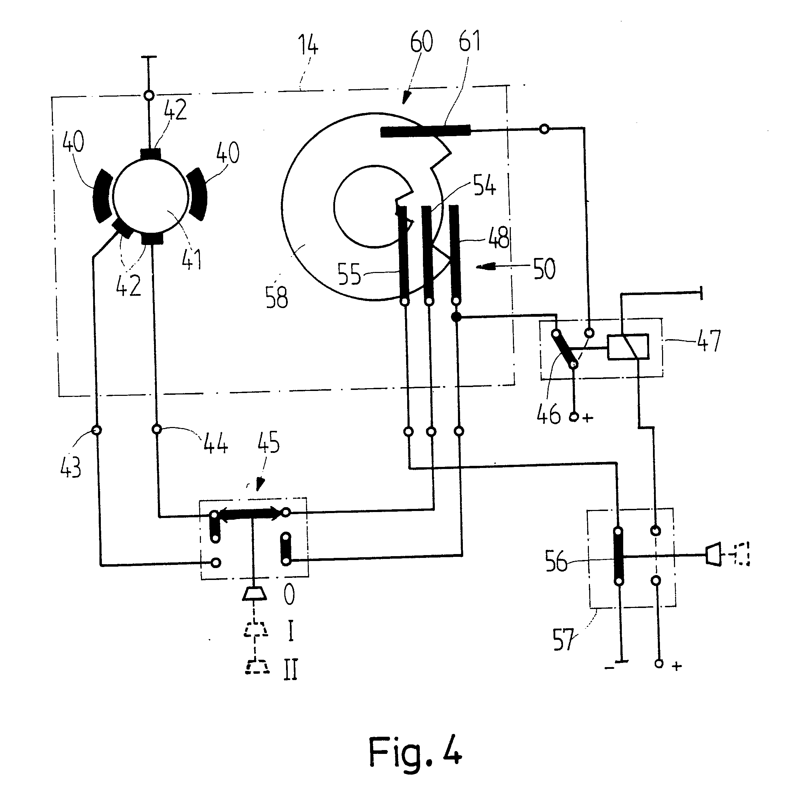

Fig. 4 zeigt die zur der Anlage nach den Fig. 2 und 3 gehörige Schaltanordnung. Der insgesamt mit 14 bezeichnete Elektromotor ist ein Permanentmagnetmotor mit den beiden Permanentmagneten 40 und mit einem Anker 41. Er kann in zwei verschiedenen Geschwindigkeiten betrieben werden und besitzt dazu drei auf einem Kollektor schleifende Kohlebürsten 42. Die beiden zu zwei Bürsten 42 führenden Eingänge 43 und 44 des Elektromotors 14 sind mit zwei Ausgängen des Wischerschalters 45 verbunden. Dieser ist aus einer Neutralstellung 0 heraus in zwei Arbeitsschaltstellungen I und II einstellbar, wobei positives Potential entweder dem Eingang 43 oder dem Eingang 44 des Motors 14 zugeführt wird. Positives Potential gelangt dabei über einen Umschaltkontakt 46 eines Relais 47 zu einem von zwei Eingängen des Wischerschalters 45.

In der Stellung des Umschaltkontakts 46, in der an dem besagten Eingang des Wischerschalters positives Potential liegt, wird außerdem noch einer Schleiffeder 48 positives Potential zugeführt, die zu einem ersten Parkstellungsschalter 50 gehört, der der in Fig. 2 gestrichelt gezeichneten Parkstellung des Wischarms 30 zugeordnet ist. Zu diesem Parkstellungsschalter 50 gehören außerdem eine zweite Schleiffeder 54, die mit dem anderen Eingang des Wischerschalters 45 verbunden ist, eine dritte Schleiffeder 55, der über einen Schaltkontkat 56 eines als Öffner und Schließer ausgebildeten elektrischen Schalters 57 an Masse angeschlossen werden kann, und eine Schaltscheibe 58, die sich mit der Motorwelle dreht, auf der die Schleiffedern 48, 54 und 55 aufliegen und die die Schleiffeder 54 wechselweise mit der Schleiffeder 48 bzw. der Schleiffeder 55 elektrisch leitend verbindet.

Der in Fig. 2 mit durchgehenden Linien gezeichneten Parkstellung des Wischarms 30 ist ein zweiter Parkstellungsschalter 60 zugeordnet, zu dem eine vierte Schleiffeder 61 gehört, die auf derselben Kreisbahn wie die Schleiffeder 48 liegt, gegenüber dieser Feder jedoch um 90 Grad versetzt ist. Die Schleiffeder 61 ist in der zweiten Stellung des Umschaltkontakts 46 des Relais 47 mit positivem Potential verbunden. Zu dem Parkstellungsschalter 60 gehören neben der Schleiffeder 61 noch die Schleiffeder 54 und die Schaltscheibe 58. Schleiffeder 54 und Schaltscheibe 58 sind also Bestandteile beider Parkstellungsschalter.

Der elektrische Schalter 57 wird durch das Öffnen und Schließen der Scheibe 12 der Fahrerkabine 10 automatisch betätigt. Die in Fig. 4 gezeichnete Position nimmt der Schaltkontakt 56 ein, wenn die Scheibe geschlossen ist. Beim Öffnen der Scheibe 12 schaltet der Kontakt 56 positives Potential zu dem Relais 47 durch, so daß dessen Schaltkontakt 46 aus der gezeigten Position in die gestrichelt eingezeichnete Position umgestellt wird.

In Fig. 4 nehmen die Schaltkontakte und die Schaltscheibe 58 Positionen ein, die einer geschlossenen Scheibe 12 und einer ausgeschalteten Scheibenwischeranlage entsprechen. Wird nun der Wischerschalter 45 betätigt, und in die erste oder zweite Arbeitsstellung gebracht, so wird der Elektromotor 14 in der üblichen Weise angesteuert und nach dem Ausschalten des Wischerschalters 45 über den Parkstellungsschalter 50 in bekannter Weise in die Parkstellung gebracht, in der der Wischarm 30 die in Fig. 2 gestrichelt eingezeichnete Lage einnimmt.

Wird die Scheibe 12 geöffnet, so wird der Schaltkontakt 56 des Schalters 57 in seine gestrichelt eingezeichnete Lage gebracht, so daß das Relais 47 anzieht und über den Schaltkontakt 46 der Schleiffeder 61 des zweiten Parkstellungsschalter 60 Pluspotential zuführt. Die Schleiffeder 55 ist über den Schalter 57 von Masse getrennt, so daß kein Kurzschluß entsteht. Das Pluspotential wird über die Schaltscheibe 58, die Schleiffeder 54 und den sich in seiner Neutralstellung 0 befindenden Wischerschalter 45 an die eine Kohle des Elektromotors 14 gelegt. Dieser beginnt, sich zu drehen, bis die Schleiffeder 61 in die Lücke der Schaltscheibe 58 gelangt. In diesem Moment wird der Elektromotor abgeschaltet. Eine Kurzschlußbremsung wird nicht vorgenommen, da die Scheibe 12 vornehmlich bei trockenem Wetter geöffnet wird und sich das Wischblatt dann nur langsam über die Scheibe bewegt. Der Wischarm befindet sich nun in der in Fig. 2 mit durchgehenden Linien gezeichneten Stellung, in der die Achse 33 zwischen Befestigungsteil 31 und Gelenkteil 32 parallel zur Schwenkachse 13 der Scheibe 12 verläuft und in der die Scheibe 12 ohne weiteres ganz geöffnet werden kann. Beim Schließen der Scheibe wird der Wischarm wieder in die andere Parkstellung gebracht.

**Ansprüche**

1. Scheibenwischeranlage für schwenkbare Scheiben von insbesondere Kraftfahrzeugen, mit einer Wischerwelle (19), die benachbart zur Schwenkachse (13) der Scheibe (12) am Aufbau gelagert ist, und mit einem über die Scheibe (12) ragenden Wischarm (30), der ein Befestigungsteil (31), mit dem er an der Wischerwelle (19) befestigt ist, und ein gegenüber dem Befestigungsteil (31) um eine Schwenkachse (33) verschwenkbares Gelenkteil (32) aufweist und der von einem Elektromotor (14) in eine Parkstellung auf der Scheibe (12) gebracht werden kann, in der der Elektromotor (14) über einen Parkstellungsschalter (50, 60) selbsttätig abgeschaltet wird, dadurch gekennzeichnet, daß in der Parkstellung die Schwenkachse (33) zwischen dem Befestigungsteil (31) und dem Gelenkteil (32) des Wischarms (30) wenigstens annähernd parallel zur Schwenkachse (13) der Scheibe (12) verläuft.

2. Scheibenwischeranlage nach Anspruch 1, dadurch gekennzeichnet, daß das Gelenkteil (32) oder eine am Gelenkteil (32) befestigte Wischstange (34) aus einer senkrecht auf der Schwenkachse (33) zwischen dem Befestigungsteil (31) und dem Gelenkteil (32) stehenden Ebene herausgebogen ist.

3.Scheibenwischeranlage nach Anspruch 1 oder 2, dadurch gekennzeichnet, daß der Wischarm (30) eine erste Parkstellung am Rande des Wischfeldes, in der er bei Beendigung des Wischbetriebs selbsttätig ablegbar ist, und eine zweite Parkstellung innerhalb des Wischfeldes besitzt, in der die Schwenkachse (33) zwischen dem Befestigungsteil (31) und dem Gelenkteil (32) des Wischarms (30) wenigstens annähernd parallel zur Schwenkachse (13) der Scheibe (12) verläuft und in die der Wischarm (30) vom Elektromotor (14) nach Betätigung einer Schalteinrichtung (57) verfahrbar ist.

4. Scheibenwischeranlage nach Anspruch 3, dadurch gekennzeichnet, daß der Elektromotor (14) für den Wischbetrieb über einen Betriebsschalter (45) willkürlich einschaltbar ist und daß der Wischarm (30) vom Antriebsmotor (14) nur in der Neutralstellung des Betriebsschalters (45) in die zweite Parkstellung verfahrbar ist.

5. Scheibenwischeranlage nach Anspruch 3 oder 4, dadurch gekennzeichnet, daß die Schalteinrichtung (57) beim Verschwenken der Scheibe (12) unwillkürlich betätigbar ist.

6. Scheibenwischeranlage nach einem der Ansprüche 3 bis 5, dadurch gekennzeichnet, daß der Elektromotor (14) in der ersten Parkstellung über einen ersten Parkstellungsschalter (50) und in der zweiten Parkstellung über einen zweiten Parkstellungsschalter (60) abschaltbar ist.

7. Scheibenwischeranlage nach Anspruch 6, dadurch gekennzeichnet, daß der Elektromotor (14) in der zweiten Parkstellung lediglich durch Abschalten des Steuerpotentials (+) ohne Kurzschlußbremsung stillgesetzt wird.

8. Scheibenwischeranlage nach Anspruch 7, dadurch gekennzeichnet, daß durch Betätigung der Schalteinrichtung (57) das Steuerpotential (+) und das Bremspotential (-) von zwei Kontakten (48, 55) des ersten Parkstellungsschalters (50) abgeschaltet und nur das Steuerpotential (+) an einen Kontakt (61) des zweiten Parkstellungsschalters (60) gelegt wird.

9. Scheibenwischeranlage nach Anspruch 8, dadurch gekennzeichnet, daß das Bremspotential (-) direkt über die Schalteinrichtung (57) schaltbar ist.

10. Scheibenwischeranlage nach einem der Ansprüche 3 bis 9, dadurch gekennzeichnet, daß der Wischarm (30) gerade ist und sich in der zweiten Parkstellung wenigstens annähernd in der Mitte des Wischfeldes befindet.

Fig.1

EP 0 365 990 A2

Fig. 2

EP 0 365 990 A2

# Fig. 3

EP 0 365 990 A2

Fig. 4